Europäisches Patentamt

European Patent Office

Office européen des brevets

(19)

(11) Publication number: **0 438 687 A1**

# EUROPEAN PATENT APPLICATION

(21) Application number: **90123637.2**

(22) Date of filing: **08.12.90**

(51) Int. Cl.⁵: **G11B 5/127**, G11B 5/133,
G11B 5/147, G11B 5/31

(30) Priority: **22.01.90 US 468028**

(43) Date of publication of application:
**31.07.91 Bulletin 91/31**

(84) Designated Contracting States:
**DE FR GB**

(71) Applicant: **International Business Machines
Corporation
Old Orchard Road
Armonk, N.Y. 10504(US)**

(72) Inventor: **Dove, Derek B.**
**41 Indian Hill Road**
**Mt. Kisco, N.Y. 10549(US)**
Inventor: **Nywening, Robert W.**
**RD No. 1, Box 13B, Johnson Road**
**Chester, N.Y. 10918(US)**
Inventor: **Re, Mark E.**
**R.R. 1, Old Logging Road**
**Yorktown Heights, N.Y. 10598(US)**
Inventor: **Shih, Kwang K.**
**P.O. Box 335, Deertrack Lane**
**Goldens Bridge, N.Y. 10526(US)**

(74) Representative: **Klocke, Peter, Dipl.-Ing.**
**IBM Deutschland GmbH Patentwesen und**
**Urheberrecht Schönaicher Strasse 220**
**W-7030 Böblingen(DE)**

(54) **Iron/iron nitride multilayer films.**

(57) In the present invention, magnetic multilayers comprising alternating iron and non-magnetic spacer layers form a multilayer magnetic film. In this multilayer magnetic film, the ratio of iron layer thickness to spacer layer thickness may be between 2 to 1 and approximately 5 to 1. Further, according to the present invention, the iron layer may have a thickness of between approximately 10 nm and approximately 100 nm. More particularly, the present invention is directed to material comprising alternating layers of iron and iron nitride.

An iron/iron nitride multilayer film according to the present invention, may be manufactured using a sputter deposition process by sputtering a single layer of iron on a sputter substrate in the substantial absence of nitrogen. Followed by sputtering a single layer iron on the iron layer in an inert gas atmosphere, including a nitrogen component, to form a non-ferromagnetic spacer layer. Repeating the process to form a desired thickness of alternating layers of iron/iron nitride.

## IRON/IRON NITRIDE MULTILAYER FILMS

The present invention relates, in general, to iron/iron nitride multilayer films and more particularly to multilayer iron/iron nitride films having low coercivity and substantially zero magnetostriction.

Thin magnetic films are particularly useful in the fabrication of advanced thin film read/write heads for data storage. In many applications permalloy has been found to be satisfactory for this purpose. Permalloy is an alloy comprising approximately 81 percent nickel (Ni) and approximately 19 percent iron (Fe).

Multilayer magnetic films using a variety of nonmagnetic interlayers are also well known. Such films are generally regarded as a promising way of minimizing the effects of demagnetizing fields in very small structures such as those used for magnetic read/write heads.

Although many magnetic materials have been found to be useful in the formation of thin magnetic films, it would be extremely advantageous to form such magnetic films from iron. The saturation magnetization (magnetization intensity) of iron is substantially higher than that of permalloy, thus rendering iron a more suitable material for the formation of magnetic films. However, iron films tend to have undesirably high coercive fields (on the order of 800 A/m (10 Oersteds)). In addition, the magnetiostriction of iron films is relatively high, increasing their sensitivity to stress. Permalloy is advantageous because it combines relatively low coercive fields with a low magnetostriction and a saturation magnetization which is acceptably high for many purposes. A material combining the higher saturation magnetization of iron with the low coercive field and magnetostriction of permalloy would, therefore, be extremely advantageous.

In the present invention as claimed, magnetic multilayers comprising alternating iron and non-magnetic spacer layers form a multilayer magnetic film. In this multilayer magnetic film, the ration of iron layer thickness to spacer layer thickness may be between approximately 2 to 1 and approximately 5 to 1. More particularly, in one preferred embodiment, the ratio of iron layer thickness to spacer layer thickness is approximately 4 to 1. Further, according to the present invention, the iron layer may have a thickness of between approximately 10 nm (100 Å) and approximately 100 nm (1000 Å). The iron layer thickness for a film according to the present invention would preferably be between 10 and 70 nm (100 and 700 Å). More particularly, in one preferred embodiment the thickness would be between approximately 10 and 25 nm (180 and 250 Å).

More particularly, the present invention is directed to material comprising alternating layers of iron and iron nitride. Preferably, according to the present invention, the concentration of nitrogen in the iron layer is less than approximately 2%, while the minimum concentration of nitrogen in the iron nitride layer is greater than approximately 20%.

An iron/iron nitride multilayer film according to the present invention, may be manufactured using a sputter deposition process by the steps of:

Sputtering a single layer of iron on a sputter substrate in the substantial absence of nitrogen.

Sputtering a single layer iron on the iron layer in an inert gas atmosphere, including a nitrogen component, to form a non-ferromagnetic spacer layer. Repeating the process to form a desired thickness of alternating layers of iron/iron nitride.

The deposited multilayer film may be improved by deposition in the presence of an external magnetic field of, for example 0.002 to 0.02 Tesla (20 to 200 Gauss).

The novel features of the invention are set forth with particularity in the appended claims. The invention itself, however, both as to organization and method of operation, together with further objects and advantages thereof may best be understood by reference to the following description of preferred embodiments taken in conjunction with the accompanying drawings in which:

Figure 1 is a plot of coercivity ($H_c$) as a function of bias voltage for a single layer iron film on a glass substrate and on a substrate of TiC coated with a thin layer of $Al_2O_3$ (i.e. a TiC-$Al_2O_3$ substrate).

Figure 2 is a plot of coercivity as a function of partial pressure of nitrogen for a single layer deposited according to the present invention.

Figure 3 is a plot of magnetic moment as a function of nitrogen partial pressure for a single layer deposited according to the present invention.

Figure 4 is a plot of resistivity as a function of nitrogen partial pressure for a single layer deposited according to the present invention.

Figure 5 is a plot of the nitrogen content in a single layer deposited according to the present invention, as a function of the nitrogen partial pressure.

Figure 6 is a plot of the hardness of a single layer film as a function of the nitrogen partial pressure.

Figure 7 is a plot the magnetostriction of a multilayer iron/iron nitride film as a function of the iron nitride layer thickness, for various iron layer thickness's.

Figure 8 is a plot of the coercivity of multilayer iron/iron nitride film as a function of the iron layer thickness, plotted for several iron nitride layer thickness's.

Figure 9 is a plot of the preferred properties as a function of the iron and iron nitride layer thickness.

Figure 10 is a series of X-ray diffraction curves for single layer iron and single layer iron nitride films.

Figure 11 illustrates a conventional thin film magnetic recording design which may utilize the magnetic film of the present invention.

Figure 12 is a schematic diagram of a conventional sputtering aparatus which may be used to implement the present invention.

In one preferred embodiment of the present invention, low coercive field $H_c$ and zero or near zero (positive or negative) magnetostriction may be obtained by manufacturing a magnetic material comprising of alternate layers of iron and iron nitride. The thickness of the iron layers would preferably be between approximately 18 and 25 nm (180 and 250 Å). Since the ratio of iron layer thickness to iron nitride layer thickness would preferably be between approximately 2 and 4, the iron nitride layers would have thickness's ranging between approximately 4.5 and 12.5 nm (45 and 125 Å). It is expected that desirable results may be achieved where the nitrogen content of the deposited iron layers is less than approximately 2 percent while the nitrogen content of the deposited iron nitride layers is greater than approximately 20 percent.

More particularly, a multilayer magnetic film having a thickness of more than one micron may be deposited on a deposition substrate using a sputter deposition process. The sputter sources would be comprised of substantially pure iron. The film would comprise alternating layers of iron and nitride. The iron layers would preferably be deposited in an environment of argon or another inert gas. While the iron nitride layers would be deposited in an environment including argon or another inert gas mixed with nitrogen. Argon may be replaced by any inert gas, for example, Helium (He) or Xenon (Xe). The iron nitride layer is likely to be $Fe_4N$ or $Fe_3N$, depending on the percentage of nitrogen in the gas during deposition. The total pressure would be approximately 0.67 Pascal (5 mTorr) and the sputter input power would be approximately 200 Watts. The deposited magnetic layer would be comprised of substantially pure iron of a thickness of between 18 and 25 nm (180 and 250 Å The thickness of the iron and iron nitride thin layers is a function of the deposition time which will vary according to the apparatus and settings used. The magnetic film could be deposited on either a glass substrate or on a TiC - $Al_2O_3$ substrate. If the film were deposited on a glass substrate, the substrate support (i.e. the non sputter surface of the substrate) would preferably be biased at approximately negative 100 Volts with respect to ground. If the film were deposited on a TiC - $Al_2O_3$ substrate, the substrate support would preferably be biased at approximately negative 25 Volts. It will be noted that the substrate support is biased in order to bias the deposition surface of the substrate, improving the coercivity of the deposited film.

In one embodiment of the present invention, a multilayer magnetic film according to the present invention may be manufactured by depositing alternating layers of iron and iron nitride, using an RF sputtering apparatus. The iron film would be deposited from a target of pure iron in a sputtering gass of argon (Ar). The total pressure would preferably be approximately 0.67 Pascal (approximately 5 mTorr) with a maximum total pressure of approximately 1.33 Pascal (10 mTorr). The RF sputtering of the iron nitride layer would take place in an environment comprising argon and nitrogen, wherein the partial pressure of the nitrogen would comprise approximately 20% of the total pressure. The range of the partial pressure of nitrogen to total pressure could be between approximately 15% minimum and approximately 40% maximum. Preferably the power utilized would be approximately 200 watts. The maximum power would be approximately 400 watts while the minimum power would be approximately 100 watts for an 20.3 cm (eight inch) diameter target. It will be recognized that, as the target increases in size, the requried power will also increase. The bias voltage would depend on the substrate used and preferably by approximately negative 100 Volts for a glass substrate. The YO 989 109 minimum bias voltage would be approximately negative 25 Volts while the maximum bias voltage would be approximately negative 120 Volts. Further, a magnetic field of between approximately 0.004 and 0.01 Tesla (40 and 100 Gauss) is applied across the film during deposition. This field may be between 0.002 and 0.02 Tesla (20 and 200 Gauss).

It will be noted that, in the previous embodiments, multilayer iron/iron nitride films are deposited by sputtering from a single target. By controlling the ratio of nitride to the target gas, magnetic iron and non magnetic layers iron nitride may be obtained. The gases used may be $N_2$ , $NH_3$, ($N_2$ + $H_2$) or any nitrogen containing gas which forms a substantially non magnetic layer when combined with iron.

While other deposition methods, such as evaporation, may be used to deposit multilayer films according to the present invention, sputtering magnetic layers offers the distinct advantage of eliminating substantially all of the pinholes in the iron layer. It will be understood that Radio Frequency sputtering, Ion Beam sputtering, Direct Current Sputtering or Magnetron sputtering or any other suitable sputtering technique may be used to deposit a multilayer magnetic film according to the present invention. Other deposition techniques include Activated-Reactive Evaporization (ARE) or Molecular Beam Epitaxy (MBE).

It will be noted that the argon gas may include a small percentage of nitrogen gas during deposition of the iron layers since the chamber may not be completely evacuated between deposition of the magnetic and non magnetic layers. This is not detrimental so long as the resulting iron layers include less than approximately 2 percent nitrogen.

By interlacing the deposited iron with thin films of iron nitride, as described, it is possible to reduce the magnetostriction of the thin films to approximately zero. In addition, the coercivity is reduced to less than 80 A/m (one Oersted (Oe)).

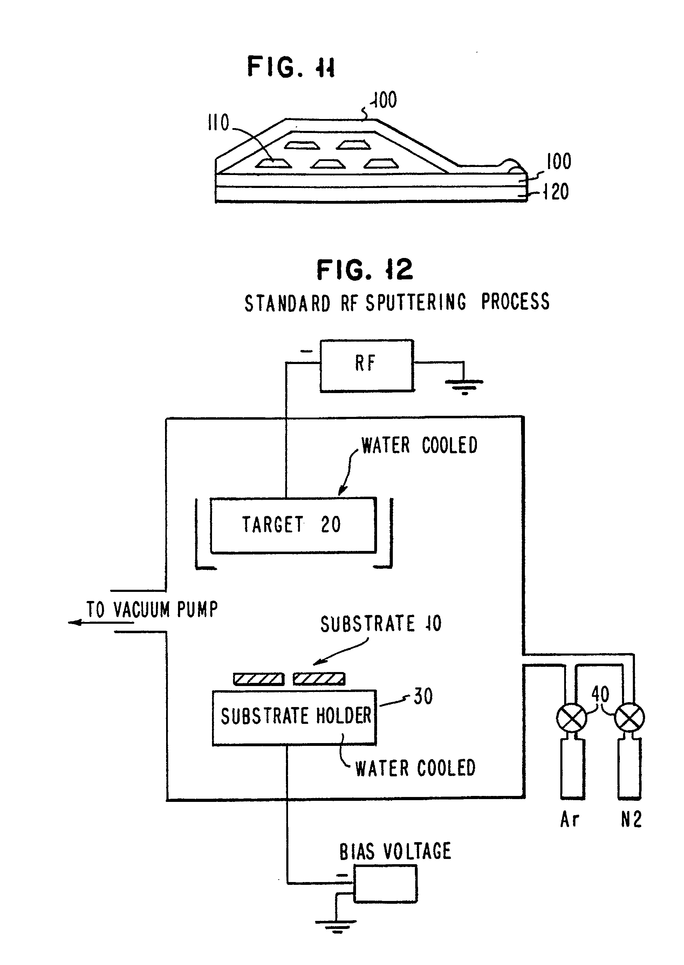

In one embodiment of the present invention, iron/iron nitride multilayer films were deposited using a Perkin Elmer Randex RF diode sputtering system illustrated in schematic form in Figure 12. The iron target 20 was an 20.3 cm (eight inch) diameter iron substrate with a purity of 99.95%. The films were deposited on substrates 10 of either 645.16 mm$^2$ (one inch square). Corning 7059 glass (approximately 1.6 cm (0.632 inches) thick) or 12.1 cm$^2$ (1 7/8 inch square) TiC - Al$_2$O$_3$, (approximately 4.76 mm (3/16 of an inch) thick). The TiC-Al$_2$O$_3$ substrate was titanium carbide (TiC) with a 10 micron aluminum oxide (Al$_2$O$_3$) coating. The substrates were mounted on a copper substrate holder with magnets underneath. The magnetic field was between approximately 0.004 and 0.01 Tesla (40 and 100 Gauss). The distance between the substrates and the target was approximately 1.5 inches. During deposition, the substrate holder and the target were water cooled. The sputtering system was evacuated to less than approximately 13.33 $\mu$ Pascal (10$^{-7}$ Torr) by a turbo molecular pump prior to introduction of the gasses. High purity Argon and nitrogen gasses were introduced into the chamber as needed to deposit the iron and iron nitride layers. The pressure was controlled by an electrically operated valve 40. During deposition, the total pressure was set at approximately 0.67 Pascal (5 mTorr) and input power was set at approximately 200 watts. The target was pre sputtered for about 10 minutes before the substrates were moved under the target. The iron layers were deposited in an atmosphere composed substantially of argon. The iron nitride layers were deposited in an atmosphere comprise of approximately 80% argon and approximately 20% nitrogen gases.

Unfortunately, it is extremely difficult to control the nitrogen content of the non magnetic spacer layers due to the nature of sputter deposition. It is expected that satisfactory performance will be obtained using a non-magnetic spacer layer comprising more than approximately 15 percent nitrogen. More particularly, optimal performance is expected from spacer layers comprising more than approximately 20 percent nitrogen. Normally, rather than control the nitrogen content of the spacer layer, the content of the deposition atmosphere is controlled. It is expected, using the sputtering technique described above, that the gas used during deposition of the spacer layer should include more than approximately 7 percent nitrogen. More particularly, it is expected that optimal films may be deposited using gas containing more than 15 percent nitrogen.

It has also been noted that the application of a magnetic field across the substrate during the sputter deposition step provides distinct improvements in the deposited film. While the application of a magnetic field during deposition is not essential to obtaining the advantages of the present invention, the direction and strength of this field are important to provide optimal performance of the resulting film. A unidirectional field is imposed on the film by the presence of the externally supplied field. Thus, the external magnetic field is important in that is used to provide a generally uniaxial anisotropy to the magnetic film.

As previously mentioned, in the prior art a layer of nickel iron alloy (permalloy) was used to create magnetic films. It is thought that the substantial advantages provided by the present invention may be a result of including an intermediate layer of iron nitride which is thought to break up grain growth in the iron layer. Thus, the thickness of the iron layer may preferably be approximately 1 grain thick. Although several other materials including carbon interlayers and $SiO_2$ are known, the iron nitride layer of the present invention provides substantial advantages over these structures.

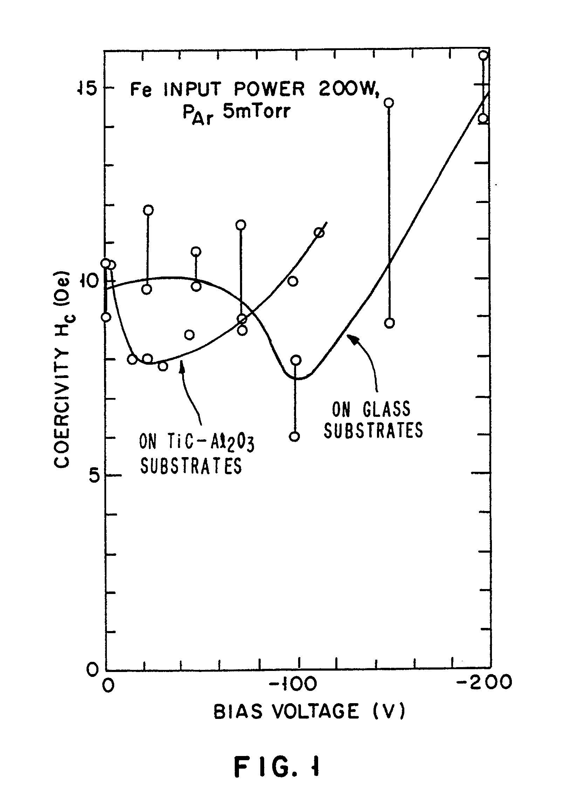

Figure 1 is a plot of coercivity as a function of the bias voltage for single iron layer deposited on a glass substrate. The layer was deposited by sputtering under the conditions described above with respect to Figure 12. This Figure may be used to determine the optimum bias voltage to use when depositing the multilayer iron/iron nitride films. It will be noted from Figure 1 that the coercivity was a minimum at a bias voltage of approximately negative 100 Volts.

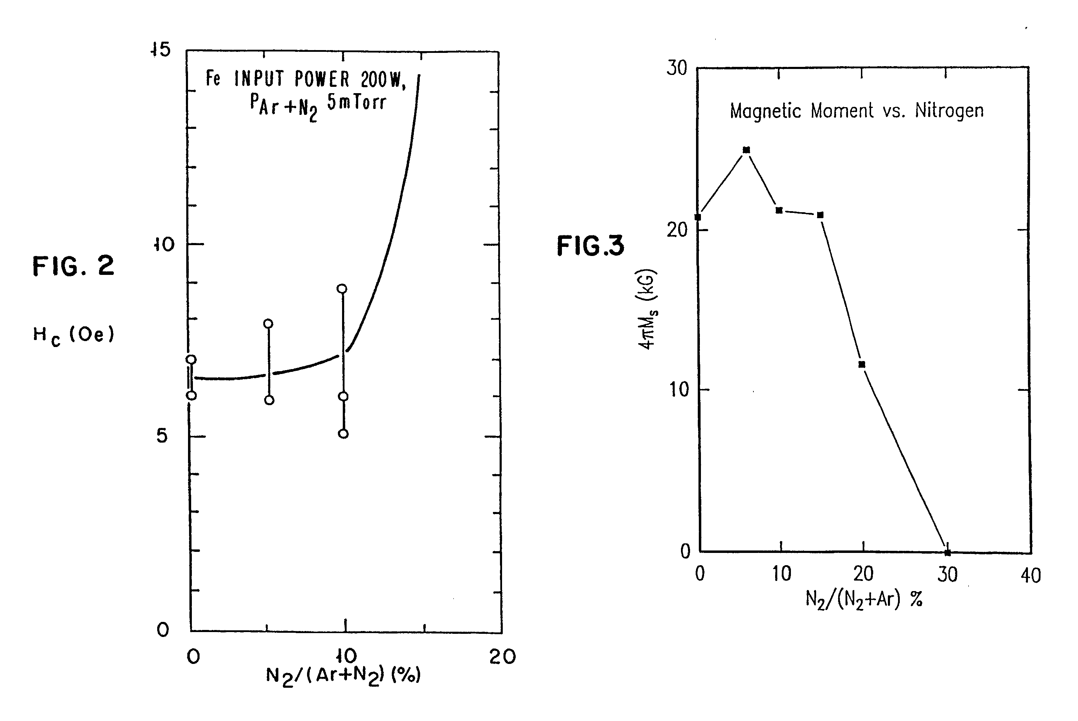

Figure 2 is a plot of coercivity as a function of the partial pressure of nitrogen in the sputtering chamber for single iron nitride layers deposited on a glass substrate. The layers were deposited by sputtering under the conditions described above with respect to Figure 12. From Figure 2, it is apparent that there is a sharp increase in the coercivity as the nitrogen partial pressure is increased above 10-15%. This Figure may be used to determine the nitrogen concentration required to optimize the iron nitride spacer layer. Thus, it would be advantageous to deposit the non magnetic layers according to the present invention in an atmosphere including more than approximately 15 percent nitrogen.

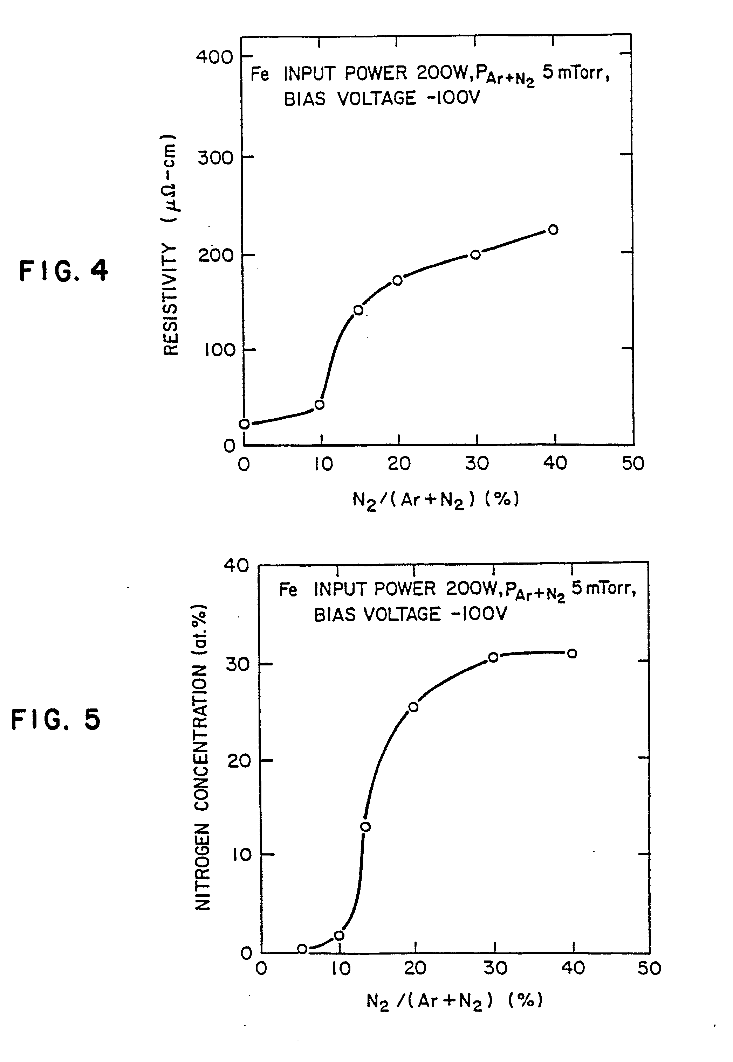

Figure 3 is a plot of the magnetic moment as a function of the nitrogen partial pressure for single iron nitride layers deposited on a glass substrate. The layers were deposited by sputtering under the conditions described above with respect to Figure 12. It is apparent from Figure 3 that the magnetic properties change when the deposition gas includes more than about 15% nitrogen. From Figure 3, it is also apparent that at 30% nitrogen in the chamber, the layers are substantially non magnetic. Thus it would be expected that optimal results may be achieved where the nitrogen concentration is approximately 15% to approximately 40%.

Figure 4 is a plot of the resistivity of single layer films as a function of the nitrogen partial pressure for single layer iron nitride films on a glass substrate. The layers were deposited by sputtering under the conditions described above with respect to Figure 12. In Figure 4 a sharp transition occurs at approximately 15% nitrogen partial pressure. Thus it will be apparent from Figures 2, 3 and 4 that optimal results may be achieved using a nitrogen partial pressure of approximately 15%.

Figure 5 is a plot of the nitrogen concentration in single iron layers as a function of the partial pressure of nitrogen in the chamber. The layer was deposited by sputtering under the conditions described above with respect to Figure 12. The nitrogen concentration in the layers may be measured using a tool called microprobe. This Figure is useful for converting the partial pressure of nitrogen in the sputtering chamber to the actual concentration in the layer. As was indicated previously, the amount that actually gets in the films would depend on the deposition rate and deposition conditions.

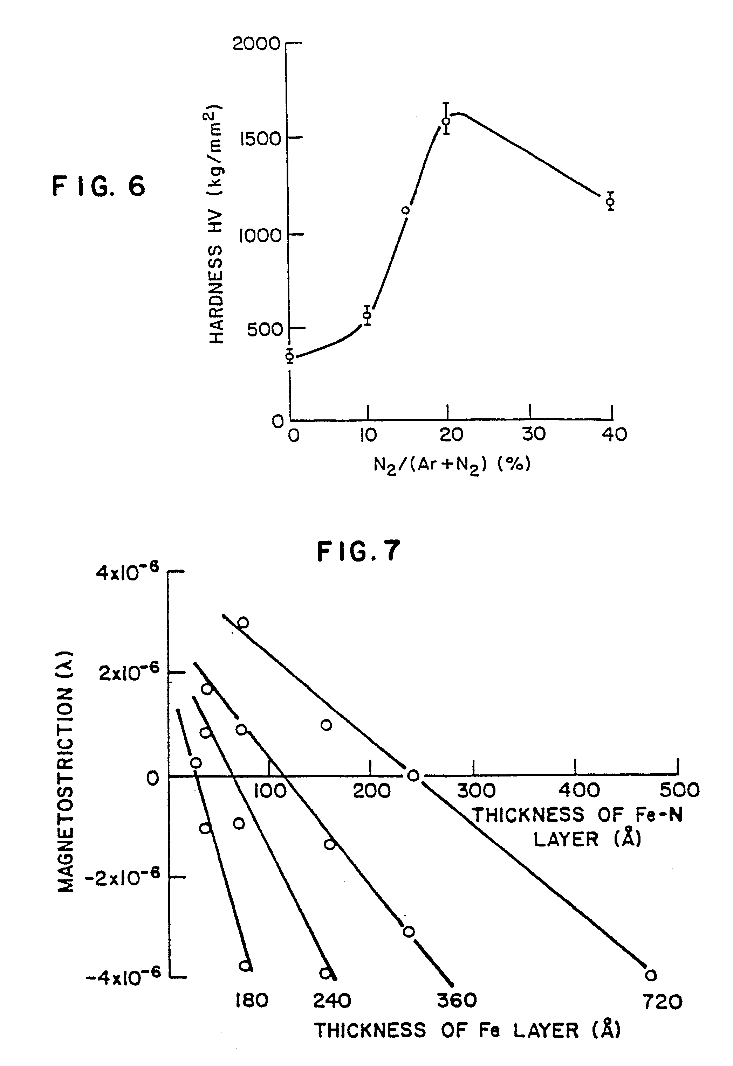

Figure 6 is a plot of the hardness of single iron and iron nitride layers as a function of the nitrogen partial pressure in the chamber. The layers were deposited by sputtering under the conditions described above with respect to Figure 12. This Figure illustrates that these films are sufficiently hard to make them attractive for magnetic tape heads as well as disk file heads.

Figure 7 is a plot of the magnetostriction of mulitlayer iron/iron nitride films as a function of the iron nitride layer thickness, with iron layer thickness as a parameter. The layers were deposited by sputtering under the conditions described above with respect to Figure 12. Nitrogen was introduced into the chamber at approximately 20% partial pressure when depositing these films. If 30% nitrogen is used, the results are expected to be similar. From Figure 7 it is apparent that the magnetostriction can be varied around zero by varying the thickness's of the layers and the relative thickness of the iron and iron nitride layers. The total film thickness for these samples is approximately 1 $\mu$m. The film characteristics illustrated are expected to be similar for greater total film thickness's as well. Thus, it is apparent that the film characteristics can be varied by changing the iron and/or iron nitride layer thickness's. For thin film head applications, the magnetostriction of the films should be near zero.

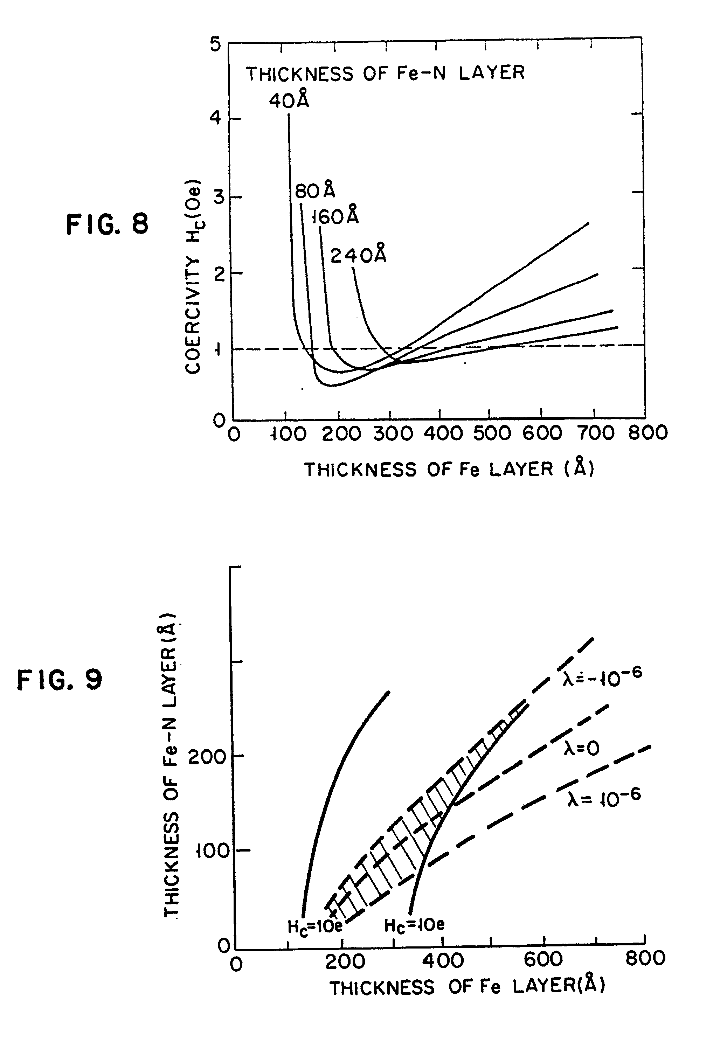

Figure 8 is a plot of the coercivity of multilayer iron/iron nitride films as a function of the individual iron layer thickness, with the iron nitride layer thickness as a parameter. The film was deposited by sputtering under the conditions described above with respect to Figure 12. Total film thickness was approximately 1$\mu$m. It is apparent that the coercivity can be varied by changing the thickness of the iron and iron nitride layers. For thin film head applications, the coercivity should be least than 80 A/m (1 Oe). It will also be apparent from Figure 8 that, as the iron layer thickness increases past 70 nm (700 Å) the coercivity increases above 1.

Figure 9 illustrates the range of iron and iron nitride layer thickness which result in optimal magnetic characteristics of the multilayer iron/iron nitride film. The layers were deposited by sputtering under the conditions described above with respect to Figure 12. In Figure 9, the optimal magnetic characteristics are arbitrarily defined as a magnetostriction ($\lambda$) in the range of $\pm$ $10^{-6}$ and a coercivity ($H_c$) of less than 80 A/m (one Oersted). Thus, a multilayer magnetic film deposited as described above, would have optimal magnetic characteristics where the iron layer thickness was between approximately 18 and 58 nm (180 and 580 Å), with an iron nitride layer thickness of between approximately 4.5 and 20 nm (45 and approximately 200 Å). The shaded area in Figure 9 represents the range of thickness's which provide the arbitrarily defined "optimal" magnetic characteristics.

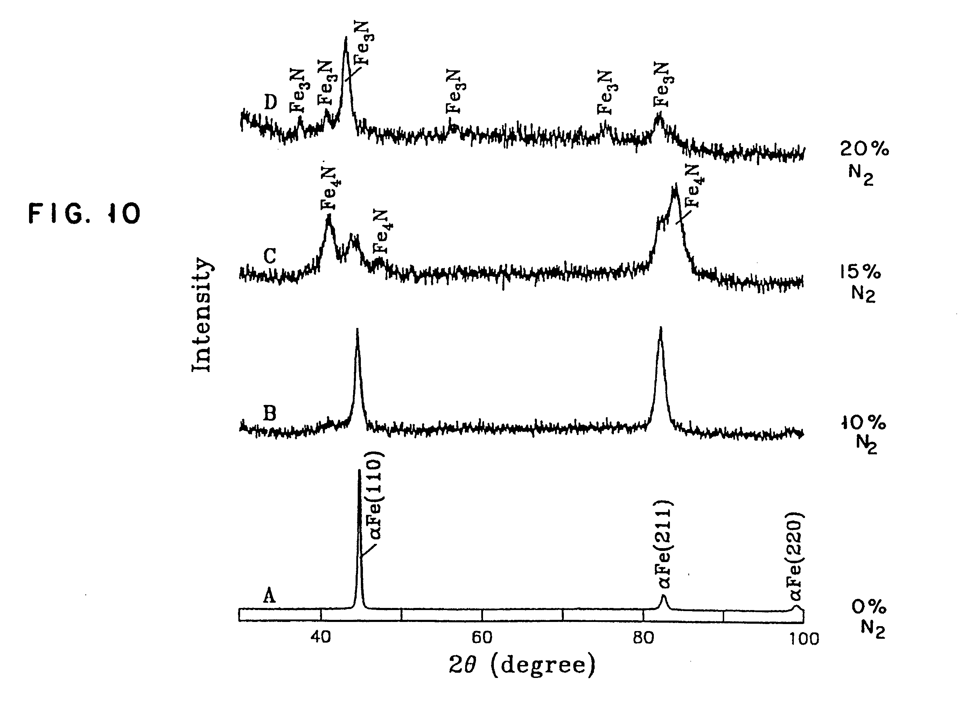

Figure 10 is a plot which shows shows X-ray diffraction curves for single iron and iron nitride layers deposited as described above. Figure 10 illustrates the crystal structure of the films. The iron films (deposited with no nitrogen present) are substantially polycrystalline. As nitrogen is introduced, the films change structure and the grains become smaller. It is expected that multilayer films will exhibit similar characteristics with somewhat higher nitrogen concentrations for the same characteristics (i.e. a multilayer film deposited at 20% concentration should behave like a single layer film deposited at 15%).

Figure 11 is a conventional thin film magnetic recording head design. A film according to the present invention may be advantageously used to implement the magnetic layer 100. Layers 110 represent the conductive coils of the recording head while layer 120 is the substrate (e.g the air bearing slider) which supports the recording head.

Since films deposited according to the present invention may tend to be process and equipment dependant, optimal films may not always be obtained by strict adherence to the pressures, voltages and magnetic field described herein. Therefore, a process for optimizing a magnetic film according to the present invention and compensating for process and equipment differences may generally be described by the steps of:

Sputtering single layer iron films in the substantial absence of nitrogen using various bias voltages and determining the bias voltage at which the minimum coercivity $H_c$ is reached. This is the optimal bias voltage. For instance, the voltage should be -100 V for most substrates and a glass substrate and should be in a range of -25 V to -150 V for sputtering systems and substrates normally used to deposit such magnetic films.

Next, sputter a number of single layer iron nitride films at the optimal bias voltage while adjusting the nitrogen concentration in the chamber. The nitrogen concentration in the chamber should vary from approximately 0% to approximately 40%. From these films, determine the magnetic properties, such as magnetization, as a function of the nitrogen concentration in the films. Determine the nitrogen concentration which provides the highest substantially zero magnetization of the iron nitride layer. For example, approximately 15% partial pressure of nitrogen to argon is expected to provide optimal characteristics in the iron nitride film, rendering it substantially non magnetic.

The sputtering system may comprise any device in which a gas is excited by an electrical field. The extent to which energy is transferred to the gas depends upon the size of the target (i.e. the source of the sputtered material) and of the plate upon which the substrate is placed. In addition, the energy transfer depends upon the spacing between the substrate holder and the target, since the 2 plates essentially form a capacitor. The electrical characteristics of the system also depend, to some extent, upon the substrate, for example its thickness and whether it is insulating or conducting. The result is that different substrates may require some adjustment of the sputtering conditions to achieve the same rate of film deposition and film properties. Thus, by reducing the power level or changing the bias field, the system can be tuned to deposit material at a desired rate and to a desired thickness.

It will be apparent from the discussion above that several "Iron Nitride" materials will provide the advantages of the present invention when used in the structure described above and claimed in the appended claims. It may, therefore be clearer to refer to the non-magnetic spacer layer according to the present invention as a "nitrided-iron" layer. As such, this layer may be any of the following: $Fe_4N$ $Fe_3N$ or $Fe_2N$. More generally, the iron nitride layer may be any layer of iron including nitrogen which produces a marked or total reduction of the magnetization of the iron alone. In the present application, the designation Fe-N is used as a generic representation for any such film and should not be confused with any specific alloy such as FeN.

A magnetic film according to the present invention has many advantages. In particular such films have the magnetic intensity of an iron film, a coercive field on the order of 80 A/m (1 Oersted) or less and a small magnetostriction on the order of ± $10^{-6}$ or less. Further, by proper deposition, the films according to the present invention may have a uniaxial anisotropy on the order of a few times 80 A/m (Oersteds). In short, magnetic films according to the present invention comprise a multilayer structure that combines the large magnetization intensity of iron with the low coercive field, anisotropy field and magnetostriction of permalloy.

It will be apparent that these advantageous traits may be improved markedly by proper adjustment of the deposition conditions. For example, control of the bias field (i.e. the voltage at the film surface during deposition) aids in reducing the coercive field below 80 A/m (1 Oersted).

It will also be appreciated that the term "magnetic", as used in the present application, is intended to refer to the ferromagnetic properties of the deposited layers and films

Finally, It will be recognized that the iron used in the present invention may contain suitable alloying constituents or other impurities for the purpose of, for example, improving its non magnetic characteristics. Such compounds are expected to provide all of the advantages of the present invention when used to deposit a multilayer structure according to the present invention.

## Claims

1. A multilayer magnetic film comprising:

   a first layer consisting substantially of iron;

   a second layer consisting substantially of iron nitride overlying said first layer.

2.  A magnetic film according to claim 1 wherein:

    said iron layer includes less than approximately 2% nitrogen; and

    said iron nitride layer includes more than approximately 20% nitrogen.

3.  A magnetic film according to claim 1 wherein:

    said second layer of comprised substantially of $Fe_3N$ or $Fe_4N$.

4.  A magnetic film according to any one of the preceding claims wherein:

    said first layer of iron is being approximately one grain in thickness; and

    said second layer of iron nitride, is thinner than said first layer.

5.  A magnetic layer (100) according to any one of the preceding claims wherein:

    said thickness of said first and second layers has a ratio of between approximately 2 and 5, preferably a ratio of 4.

6.  A magnetic film according to any one of the preceding claims wherein:

    said first layer has a thickness of between approximately 10 and 100 nm (100 and 1000 Å), preferably between approximately 10 and 70 nm (100 and 700 Å), and more particularly between approximately 18 and 25 nm (180 and 250 Å).

7.  A magnetic film according to claim 4 wherein:

    said grain has a thickness of not more than approximately 70 nm (700 Å), preferably not more than approximately 30 nm (300 Å).

8.  A magnetic film comprising:

    a first plurality of layers comprised substantially of iron;

    a second plurality of layers of a non-magnetic iron-nitride material interlaced with said first plurality of layers;

    said layers of said first plurality being between approximately one and five times as thick as said layers of said second plurality.

9.  A magnetic film according to claim 8 wherein:

    said layers of said first plurality are between approximately 18 and 25 nm (180 and 250 angstroms) thick.

10. A magnetic film according to claim 8 or 9 wherein:

    said layers of said second plurality are between approximately one and four times as thick as said layers of said second plurality.

11. A method of manufacturing multilayer magnetic films by sputter deposition of layers of iron interlaced with layers of non-magnetic iron nitride spacer material on a deposition substrate, comprising the steps of:

    sputter depositing a first iron layer in an inert gas atmosphere, at a total pressure of between approximately 0.4 and 1.33 Pa (3 and 10 mTorr) an input power of between approximately 100 and 400 watts and a substrate bias of between approximately negative 25 and approximately negative 125 Volts;

    sputter depositing a second, substantially non-magentic spacer layer in an atmosphere of an inert gas and nitrogen, at a total pressure of approximately 0.67 Pa (5 mTorr) said nitrogen comprising approximately 0.13 Pa (1 mTorr) of partial pressure an input power of between approximately 100 and 400 watts and a substrate bias of between approximately negative 25 and negative 100 Volts;

    sputter depositing said first layer to a thickness of between approximately 10 and 200 nm (100 and 2000 Å);

    sputter depositing said second layers to a thickness of between approximately 2 to 100 nm (20 to 1000 Å).

12. A method of manufacturing iron films by sputter deposition of layers of iron interlaced with non-magnetic spacer material on a glass substrate comprising the steps of:

    sputter depositing a first layer of iron in an inert gas atmosphere, at a total pressure of approximately 0.67 Pascal (5 mTorr), an input power of approximately 200 watts and a substrate bias of approximately negative 100 Volts;

    sputter depositing second, substantially non-magnetic layer of iron in an inert gas atmosphere including nitrogen at a total pressure of approximately 0.67 Pa (5 mTorr), said nitrogen comprising approximately 0.13 Pa (1 mTorr) of partial pressure at an input power of approximately 200 watts and a substrate bias of approximately 100 Volts;

sputter depositing said first layers to a thickness of between 18 and 25 nm (180 and 250 Å);

sputter depositing said second layer to a thickness of between 4.5 and 6.5 nm (45 and 65 Å).

13. A method of manufacturing iron films according to claim 11 or 12 wherein:

a magnetic field is applied parallel to the surface of said deposition substrate during said sputter deposition, said magnetic field having an intensity of between 0.002 and 0.02 Tesla (20 and 200 Gauss), preferably between 0.004 and 0.01 Tesla (40 and 100 Gauss).

**FIG. 1**

# FIG. 2

Fe INPUT POWER 200W,
$P_{Ar+N_2}$ 5mTorr

$H_c$ (Oe)

$N_2/(Ar+N_2)$ (%)

# FIG.3

Magnetic Moment vs. Nitrogen

$4\pi M_s$ (kG)

$N_2/(N_2+Ar)$ %

EP 0 438 687 A1

FIG. 4

FIG. 5

FIG. 6

FIG. 7

FIG. 8

FIG. 9

FIG. 10

# FIG. 11

# FIG. 12

## STANDARD RF SPUTTERING PROCESS

## DOCUMENTS CONSIDERED TO BE RELEVANT

EP 90123637.2

| Category | Citation of document with indication, where appropriate, of relevant passages | Relevant to claim | CLASSIFICATION OF THE APPLICATION (Int. Cl.5) |
|---|---|---|---|
| P,X | DATABASE WPIL, no. 90-344 783, DERWENT PUBLICATIONS LTD., London<br>* Title *<br>& JP-A-02-249 210 (MATSUSHITA ELEC IND K.K.) 05-10-1990 | 1,8 | G 11 B 5/127<br>G 11 B 5/133<br>G 11 B 5/147<br>G 11 B 5/31 |
| P,A | * Fig. 1,2 *<br>& JP-A-02-249 210 (MATSUSHITA ELEC IND K.K.)<br>-- | 11,12 | |
| X | PATENT ABSTRACTS OF JAPAN, unexamined applications, P field, vol. 11, no. 9, January 10, 1987 THE PATENT OFFICE JAPANESE GOVERNMENT page 83 P 534<br>* Kokai-No. 61-184 718 (FUJITSU LTD) * | 1,8 | |
| A | ---- | 11,12 | |

TECHNICAL FIELDS
SEARCHED (Int. Cl.5)

G 11 B 5/00
H 01 F 10/00

The present search report has been drawn up for all claims

| Place of search | Date of completion of the search | Examiner |
|---|---|---|
| VIENNA | 22-03-1991 | BERGER |